# EUROPEAN PATENT APPLICATION

(11) **EP 4 550 714 A1**
(43) Date of publication of application: **07.05.2025**
(21) Application number: 23207493.0
(22) Date of filing: 02.11.2023
(51) Int. Cl.: H04L 9/00, H04L 9/32, H04L 9/40

(54) **MODULAR APPARATUS FOR CREATING RESILIENT SMART-CONTRACTS**

(71) Applicant: Silver, Sepp, 10416 Harjumaa Tallinn (EE)
(72) Inventor: Silver, Sepp, 10416 Harjumaa Tallinn (EE)

(57) **Abstract**

This invention presents a structured framework for developing and refining smart contracts essential for B2B blockchain ecosystems. It harnesses computational resources, including processing units and memory, to optimize the adaptability and robustness of smart contract generation processes. Central to this system is the Modular Asset Lifecycle Descriptor (ALD), facilitating a direct, state-transition methodology that simplifies the smart contract generation process, diverging from traditional code parsing approaches. A unique feedback loop, drawing inspiration from aviation industry strategies, enables continuous improvement and refinement, enhancing the system's resilience and integrity. The utilization of modular printer units further augments the system's flexibility, allowing for the seamless integration of community-driven enhancements and iterative updates. This architecture heralds a transformative approach in smart contract generation, championing enhanced clarity, efficiency, and resilience in the dynamic realm of blockchain technologies.

## Description

### BACI<GROUND

### Field of the Invention:

The present invention is concerned with a system architecture, instantiated via cloud-based hardware resources, that facilitates the generation and iterative enhancement of resilient smart contracts for blockchain networks, with particular applicability to business-to-business (B2B) scenarios within the blockchain domain. The invention leverages both software and hardware elements, utilizing cloud infrastructure that comprises data processing units, network communication systems, and storage resources to realize a secure, efficient, and adaptable execution environment for smart contract creation.

### Description of the Related Art:

As blockchain technology's prominence escalates, particularly within the B2B sector, its market trajectory suggests a substantial expansion. The technology's core attributes-immutable record-keeping, rapid transactional throughput, prompt settlement, and enhanced security and privacy-are driving its adoption. However, these advantages come with the challenge of ensuring the irrevocability of blockchain transactions is matched by the reliability and security of smart contracts.

The industry's current approach to smart contract security relies heavily on exhaustive testing and extensive audits, often incurring prohibitive costs. Solutions like pre-audited smart contracts address some of these cost issues but introduce complexity due to their wide-ranging applicability, necessitating costly expert customization and re-auditing for modifications mandated by evolving business or regulatory requirements.

The proposed invention differentiates itself by employing a feedback loop mechanism, inspired by the continuous improvement protocols of the aviation industry, to enhance smart contract integrity. This Modular Asset Lifecycle Descriptor (ALD) within a hardware-based feedback loop provides a framework for the system that not only simplifies the development process but also imbues the generated smart contracts with an inherent capacity for evolution and refinement-qualities that are vital for the antifragility and safety of blockchain-based business operations. Several prior art methods have been proposed to address these challenges:
EP3906488A1 suggests an automated method to enhance individual smart-contracts but does not focus on generating subsequent smart contracts that incorporate observed fixes.
US2023072988A1 describes a method for transforming natural language input into a Domain Specific Language (DSL), then converting this DSL into a smart contract template using an abstract syntax tree (AST) and a grammar file. In contrast, our system employs a state-machine-based approach coupled with modular printers to streamline the generation of smart contracts. Unlike the AST method which handles more arbitrary logic, our direct state-machine orientation is specifically designed to align with the state management needs of blockchain ledgers. Furthermore, our system enhances resilience through a feedback loop that allows for the dynamic selection and upgrading of (sub-)printers. This loop enables continuous refinement based on real-world auditing, testing, and community feedback, differentiating our approach in its adaptability and ongoing optimization capabilities.
EP3673432A2 details a method for executing transitions on blockchain corresponding to workflow transitions. These methods do not claim modularity or the addition of resiliency through a feedback loop.

Against this backdrop, the present invention introduces a novel approach that leverages a linear state-machine like asset lifecycle descriptor and a modular apparatus to process incoming lifecycle descriptions into smart-contracts while incorporating a feedback loop. This approach offers flexibility in creating smart-contracts, standardizes well-known smart contract fragments for easier auditing, and introduces an antifragile component that enhances the safety and reliability of the smart-contracts.

### SUMMARY

The present invention provides a system architecture designed to facilitate the creation, deployment, and iterative improvement of smart contracts within a blockchain infrastructure, specifically tailored for B2B applications. The architecture is underpinned by a network of cloud-based hardware resources, including but not limited to, scalable processing units, distributed data storage, and secure communication channels, to support the system's operations.

The inventive system employs a Modular Asset Lifecycle Descriptor (ALD) to define and manage the lifecycle of assets on the blockchain. The ALD is processed by a collection of software modules, referred to as "printers," each responsible for generating specific sections of the smart contract code. These printers operate on virtualized hardware resources provisioned in the cloud, ensuring both the flexibility and the robustness of the contract generation process.

A key innovation of the system is the integration of a feedback loop. Feedback from various sources-including automated unit tests, smart contract audits, active monitoring systems, and possibly Al-based analysis-is used to identify and implement improvements in the contract generation modules. These enhancements are then tested and validated on dedicated hardware resources, ensuring the reliability of subsequent smart contract iterations.

The system's modularity is reflected in the ability to select and integrate different printer modules based on the requirements of the ALD. This selection process is facilitated by a hardware-implemented management module that dynamically allocates cloud-based computational resources to the appropriate printer modules. The system is designed to be language-agnostic, capable of supporting various blockchain programming languages and accommodating updates to the printer modules via the feedback loop.

Moreover, the system's architecture allows for the possibility of decentralized governance in the form of community-driven proposals for modifications to the printer modules. This aspect of the system is facilitated by hardware-configured network interfaces that enable participation and voting by the user community, much like how decentralized autonomous organizations operate.

In a particular on-premises embodiment, the invention comprises a cohesive assembly of hardware components for the secure and efficient generation of smart contracts. The Printer Workstation, integrating the functionality of both primary and sub-printers, serves as the nucleus for smart contract code generation, directly processing the structured asset descriptions from the ALD Serializer Server. A Compiler Server is responsible for translating the generated code into executable bytecode, while the Blockchain Node Server facilitates the secure deployment and validation of the smart contracts on the blockchain. Orchestrated by a human operator through a centralized control station, this embodiment enables a meticulous and operator-driven execution of the smart contract lifecycle, supported by a robust networking infrastructure and secure data storage solutions, embodying a secure and resilient system for B2B blockchain applications.

### DETAILED DESCRIPTION

### Generation of Asset Lifecycle Descriptor (ALD)

The generation of the Asset Lifecycle Descriptor (ALD) is a foundational aspect of the system, although not prescriptive to the essence of the patent. Various methods could be employed to create the ALD, including but not limited to:

### AI-Generated ALD

An AI-based, such as a generative pre-trained transformer system could be used to automatically generate the ALD, understanding and formalizing the asset's lifecycle stages and transitions into the structured ALD format.

### Synthesis from Format Proofs

ALD could also be synthesized from formal proof-based languages such as TLA+, where the formal proofs are translated into the lifecycle descriptor, ensuring that the ALD adheres to rigorously tested logical rules and constraints.

### No-Code Tool Generation

Utilizing a no-code tool akin to simplified Business Process Model and Notation (BPMN) could facilitate the creation of the ALD. Such tools would allow for the visual designing of the asset lifecycle, making it accessible for individuals without deep technical expertise.

### Asset Lifecycle Descriptor (ALD)

An "Asset Lifecycle Description" (ALD) in a blockchain context is a formalized structure that defines and tracks the various stages an asset goes through during its existence on a blockchain network. It ensures that each asset is unique (non-fungible) and that its ownership and permissions are transparent and immutable. The ALD encompasses the rules and logic for the asset's transitions and interactions within the network, providing a clear framework for what actions can be performed, by whom, and under what conditions.

In essence, ALD is akin to a blueprint for the life of a blockchain asset, detailing every aspect of its existence, from creation to destruction. It provides a structured, secure, and scalable method to manage the complexities of asset lifecycles in decentralized networks, ensuring compliance, security, and adaptability in the ever-evolving landscape of blockchain technology.

### Serialized State and Transition Description

ALD serializes the states and transitions of an asset, effectively creating a state machine on the blockchain. This serialized format outlines how an asset can move from one state to another, encapsulating the business logic that governs these transitions. This serialization is critical for ensuring that the asset's journey is traceable and complies with predetermined rules that prevent unauthorized actions.

### Ownership and Permissions

Since blockchains are designed around the principle of clear ownership, typically represented by non-fungible tokens (NFTs), ALD specifies the ownership of each asset state and the permissions required for transitions. This clarity in ownership and permissions is paramount in maintaining the integrity and security of the assets on the blockchain.

### Immutable Lifecycle

As blockchain records are immutable, once an action is taken, it cannot be reversed. ALD, therefore, includes mechanisms to handle situations like reentrancy attacks or the need to withdraw funds. It does so by carefully defining the conditions and states where these actions are permissible, effectively "programming" the lifecycle of the asset to anticipate and respond to such scenarios.

### Printer Metadata

The ALD contains metadata that directs a primary printer to use specific sub-printers for different functionalities within the smart contract. This metadata dictates which modules to employ for given actions or components of the contract. For instance, the ALD may specify the use of a default payment module for handling transactions, but it can also indicate a specialized payment module hosted externally for enhanced features or compliance with certain standards. This approach allows for the customization and extension of smart contract functionalities by simply updating the printer instructions within the ALD without altering the core structure of the ALD itself.

### Modularity and Feedback Loop

The modular nature of printers allows for the smart contract to be updated or improved as a whole. When the ALD specifies a different printer for a particular module or functionality, the primary printer interprets this change and 'reprints' the entire smart contract with the updated module integrated. This is a critical feature for maintaining the contract's relevance and optimizing its performance over time. The contract is not printed in segments but as a unified codebase that reflects the current state of the ALD instructions, including any specified printer versions or custom modules. This ensures that all components of the smart contract are compatible and work cohesively.

### ALD Serializer

The ALD Serializer operates through a dedicated server unit, equipped with specialized data processing hardware capable of transforming the Asset Lifecycle Description (ALD) into a structured in-memory object hierarchy. This hardware-driven process ensures the efficient translation of lifecycle information into a format that modular printing units can interpret. The ALD Serializer's functionality is key for several reasons:

### Deserialization

It decodes the ALD, which may be provided in various formats such as XML, JSON, or a custom syntax, into a structured, navigable object tree. This deserialization is the first step in bringing the abstract definitions of the ALD into a form that can be actively used by the system.

### Validation

After the ALD is deserialized, the Serializer performs validation checks to ensure that all necessary data is present and correctly formatted. It checks for completeness and logical consistency within the ALD, guarding against errors that could arise from incomplete or malformed data.

### Interface with Printers

The object tree serves as the interface between the ALD and the plurality of printers. Printers do not interact directly with the ALD; instead, they use this deserialized tree to understand the asset's lifecycle and generate the corresponding smart contract code. This abstraction layer allows for printers to be agnostic of the ALD's initial format and solely focused on their task of code generation.

### Flexibility and Scalability

By separating the ALD from the printers via the Serializer, the system gains flexibility and scalability. Changes can be made to the ALD without affecting the printers, and vice versa. This also facilitates the addition of new printers or the updating of existing ones without the need to modify the ALD or the Serializer.

### Plurality of Printers

The present invention encompasses a system featuring a plurality of modular printers, each integral to the generation of smart contracts for assets managed on a blockchain network. The system is designed to be language-specific, where a user's input dictates the primary printer selection, corresponding to the language of the smart contract desired. For instance, specifying "lang=solidity" would select **SolidityPrinter** as the primary printer, capable of interpreting and compiling code for Ethereum Virtual Machine (EVM) compatible blockchains.

### Primary Printers

The primary printers, such as **SolidityPrinter**, **LeoPrinter**, **RustPrinter**, etc., are predefined and known entities within the system, selected based on the specified language version or flavor. These primary printers are responsible for orchestrating the smart contract generation process by utilizing a series of sub-printers, each tasked with handling specific elements of the Asset Lifecycle Description (ALD).

### Sub-Printers Interaction

Sub-printers are specialized entities designed to process individual components of the ALD, such as asset objects, transitions, and implemented interfaces. Each sub-printer adheres to a specific interface, for example, **Print(ALD fullAld, Transition transition, Context context)**, ensuring a standardized interaction. Moreover, sub-printers are required to manage dependencies effectively, with the ability to specify minimum version requirements for other related sub-printers to maintain compatibility and functionality within the system.

### Module Parameters

Module parameters play a critical role in the selection process of both primary and sub-printers. These parameters allow for the definition of the version, whether it's the default latest version or a specific version, such as **default.v1.1** or **MyCompany.Payment.latest.** This modular approach ensures that the smart contract generation process is both flexible and precise, catering to the needs of various blockchain platforms and user requirements.

### Third-Party Printers and Dependencies

The system is configured to incorporate third-party printers or additional dependencies, which may be fetched from network locations. This capability allows for the extension and customization of the smart contract generation process. Security and compatibility checks are suggested to be part of the implementation to ensure the integrity of the generated contracts.

### Output Format

The output of the primary printer is a smart contract source code tailored to the specified blockchain platform, as denoted by the **lang** parameter. The system can support various blockchain platforms by distinguishing between language variations, such as **lang=rust_near** for NEAR protocol or **lang=rust_solana** for Solana.

### Iteration Process

The iteration through the elements of the ALD by the primary printer is a static and predetermined process. This ensures consistency and reliability in the smart contract generation, crucial for security and auditing purposes. The order of operations, particularly the execution of third-party calls, is fixed to adhere to security best practices and the specific language's standards.

This structured approach to smart contract generation via a series of modular printers allows for a high degree of customizability while maintaining a secure and reliable output, which is essential in the context of blockchain technology.

### The Feedback Loop

The present invention integrates a feedback loop mechanism to foster an antifragile smart contract ecosystem. This feedback loop is engineered to be both versatile and inclusive, capable of receiving input from a variety of sources including, but not limited to, manual testing, automated unit tests, smart contract audits, active post-deployment monitoring, or Al-based analysis.

### Feedback Integration and Improvement:

The feedback, whether sourced from systematic evaluations or community-driven insights akin to Ethereum Improvement Proposals (EIPs), is funneled back into the system to inform the development of printer module updates. These updates are not generated arbitrarily; instead, they are meticulously tested through standard practices like unit testing and integration testing to ensure robustness and reliability before integration into the system.

### Decentralized Governance:

The system may incorporate a decentralized governance model that allows for community participation in the acceptance of changes arising from the feedback loop. This model ensures that updates to the printer modules are in alignment with user and community interests, reflecting a consensus-driven approach to system evolution.

### User Customization and Publication:

Moreover, users have the autonomy to create, publish, and select their variants of printer modules. The system facilitates this by allowing users to specify in the ALD which versions, tools, or extensions to employ, thereby customizing the smart contract generation pipeline to their preferences.

### Safety and Evolution:

The feedback loop ensures that every encountered issue is transparently documented and utilized to improve subsequent versions of the smart contracts. This process embodies a commitment to safety and continuous improvement, mirroring how the lessons learned from each incident in aviation lead to collectively safer travel.

### Antifragile Business Ecosystems:

Ultimately, the objective is to foster the growth of a business economy on the blockchain that is inherently safe and self-improving. By ensuring that the modular printers and their versions are adaptable and that the regeneration process incorporates the latest refinements, the system guarantees that improvements are persistent and benefit all future smart contracts.

### Compilers

Compilers play a pivotal role in converting the high-level smart contract code generated by the printers into low-level bytecode in case the language in question is not interpretable. These compilers are hosted on dedicated computing servers within the system's infrastructure, featuring optimized hardware designed for high-speed code compilation. The compiler hardware is selected based on the ability to handle multiple programming languages and blockchain platforms, ensuring broad compatibility and rapid execution of compilation tasks.

### Blockchain Nodes

Blockchain Node Hardware forms the backbone of the on-premises blockchain infrastructure. Each node server is a high-availability machine with fault-tolerant design, ensuring uninterrupted operation. These servers facilitate the deployment and execution of smart contracts and maintain the ledger's state. The hardware includes advanced network interfaces for reliable RPC communication with other blockchain participants, including miners and validators, to maintain the blockchain's distributed ledger.

### On-Premises Embodiment

In one embodiment, the invention is implemented using on-premises hardware, establishing a decentralized and secure environment for organizations that opt for or necessitate local control over cloud-based solutions.

This on-premises embodiment offers a robust and secure alternative to cloud-based systems, granting businesses full sovereignty over their smart contract generation processes. The selected hardware components ensure that the system's functionality aligns with the demanding requirements of smart contract creation and deployment, thus providing a reliable and efficient solution for B2B blockchain applications.

### ALD Serializer Hardware

A specialized server equipped with high-speed processors and extensive memory is dedicated to deserializing and validating the Asset Lifecycle Description (ALD). This server transforms the ALD into a structured format for subsequent processing.

### Primary Printer Workstation

A high-performance computing workstation functions as the primary printer, containing integrated sub-printer modules. These modules are software entities with firmware-level integration that generate specific sections of the smart contract code derived from the deserialized ALD. This central workstation facilitates the composition of the entire smart contract code in a cohesive manner.

### Compiler Servers

A set of computing servers, designed for high-throughput operations, compile the smart contract code into bytecode that is executable by a blockchain node. These servers, equipped with state-of-the-art compilers, handle various programming languages and cater to different blockchain platforms.

### Blockchain Node Hardware

A fortified server, featuring a secure enclave processor, creates a trusted execution environment for blockchain nodes. It hosts a full node of the specified blockchain network, which is pivotal for the validation and execution of smart contracts.

### Operator Control Station

A sophisticated control station provides the human operator with the necessary interfaces to orchestrate the smart contract generation workflow. The operator controls the sequence of operations, from the serialization of ALD to the deployment of smart contracts, through this station, which is outfitted with multiple monitors and control devices.

### Networking Infrastructure

An elaborate network architecture, including routers, switches, and firewalls, ensures secure and rapid data exchange among the system's hardware components, safeguarding the system from external threats.

### Physical Storage Devices

High-reliability storage systems securely store the ALD, the resulting smart contract code, and other pertinent data. Redundancy and backup protocols are in place to ensure the preservation of data integrity and availability, even in the event of hardware malfunctions.

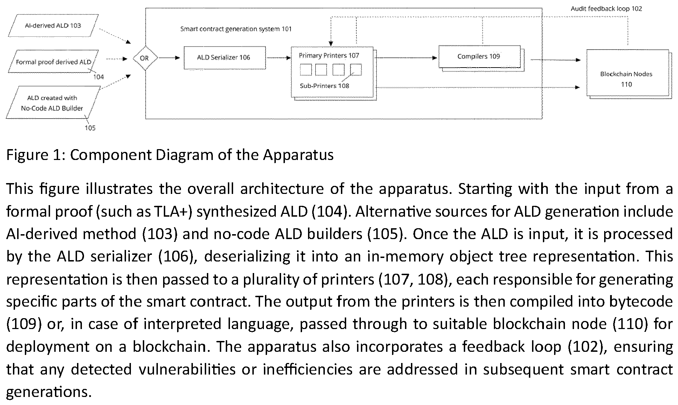

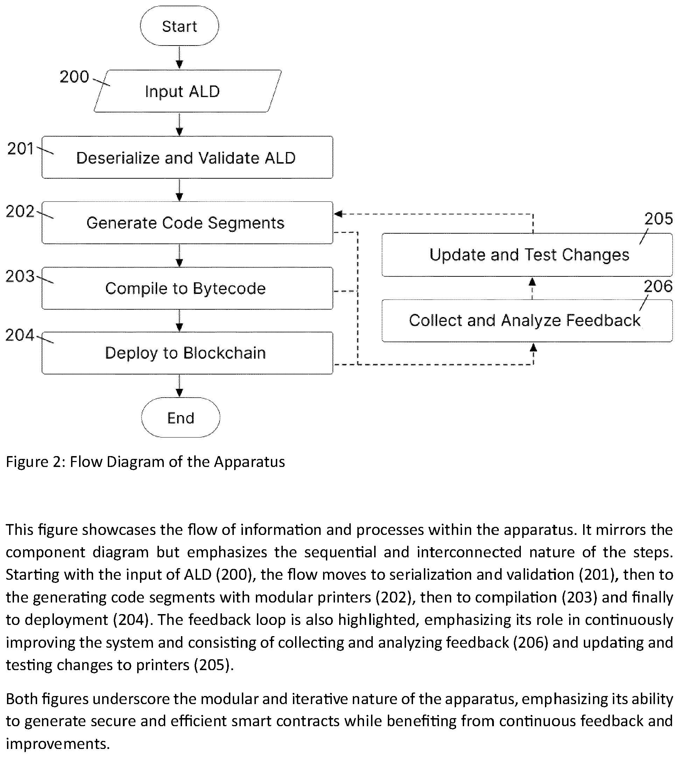

## Claims

1. An apparatus for generating smart contract code, operable in both cloud-based and on-premises configurations, comprising:
• A processing unit configured to deserialize Asset Lifecycle Descriptions (ALD) into a structured object representation, capable of handling multiple ALD data formats;
• A printing module with integrated sub-modules for generating segments of smart contract code from the structured object representation, wherein the generated code is compatible with multiple blockchain platforms;
• Compilation hardware for converting the smart contract code into executable bytecode;
• A blockchain interfacing unit for deploying and validating the bytecode on a blockchain network;
• A control system managed by an operator for overseeing the serialization, code generation, compilation, and deployment processes;
• Networking hardware enabling secure communication between components of the apparatus;
• Data storage hardware for maintaining the integrity and redundancy of the ALD, smart contract code, and ancillary data.

2. The apparatus of claim 1, wherein the networking hardware includes security protocols or encryption standards such as TLS or AES to protect data integrity and confidentiality across cloud-based and localized network infrastructures.

3. The apparatus of claim 1, further comprising an adaptive feedback module configured to:
• Collect and analyze performance data and feedback from a plurality of sources;
• Update and validate the printing module's sub-modules in response to the feedback, thereby enhancing the robustness and security of subsequent smart contracts;
• Employ governance protocols for facilitating community-driven improvements and acceptance of feedback-derived module modifications.
• Systematically incorporate improvements into the modular components, ensuring that each iteration of the smart contract code is informed by previous learnings and validations.

4. The apparatus of claim 1, wherein the compilation hardware is adaptable, comprising updatable compilers that support a plurality of blockchain programming languages and enable platform-specific bytecode generation for diverse blockchain networks.

5. The apparatus of claim 1, wherein the blockchain interfacing unit comprises means for trusted execution of blockchain transactions and is capable of interfacing with both public and private blockchain networks.

6. A method of operation for the apparatus of claim 1, comprising steps of:
• Deserializing an ALD into a structured object representation utilizing the processing unit;
• Generating code segments for a smart contract via the printing module;
• Compiling the generated code segments into executable bytecode using the compilation hardware;
• Deploying the bytecode to a blockchain network utilizing the blockchain interfacing unit.
• Including verification steps throughout the code generation process to ensure the integrity of the smart contract code.

7. The method of claim 6, further incorporating module parameters from the ALD to dynamically select and apply specific versions or configurations of the printing module's sub-modules during smart contract code generation, wherein the module parameters include security features and compliance checks.

8. A method for iterative enhancement of smart contract generation modules within the apparatus of claim 1, involving:
• Monitoring and aggregating operational feedback from deployed smart contracts;
• Assessing the feedback for identifying updates to the smart contract generation process;
• Automatically implementing the updates to refine the printing module's sub-modules;
• Testing the updated smart contract generation modules in a sandboxed environment prior to their application in subsequent generations of smart contracts;
• Applying the refined sub-modules in subsequent generations of smart contracts.
